# EUROPEAN PATENT APPLICATION

(11) **EP 4 411 562 A1**
(43) Date of publication of application: **07.08.2024**
(21) Application number: 23789478.7
(22) Date of filing: 07.08.2023
(51) Int. Cl.: G06F 16/27

(54) **DATA PROCESSING METHOD AND APPARATUS, ELECTRONIC DEVICE, COMPUTER STORAGE MEDIUM AND COMPUTER PROGRAM PRODUCT**

(30) Priority: 22.12.2022 CN 202211658556
(71) Applicant: Tencent Technology (Shenzhen) Company Limited, Shenzhen, Guangdong 518000 (CN)
(72) Inventor: HAN, Tianle, Shenzhen Guangdong 518000 (CN)
(74) Representative: Nederlandsch Octrooibureau
(86) International application number: PCT/CN2023/111493
(87) International publication number: WO 2024/131083

(57) **Abstract**

This application relates to the technical field of blockchain, and in particular, to a data processing method and apparatus, an electronic device, a computer storage medium, and a computer program product. The method includes: receiving a data processing request transmitted by an object device, obtaining contract identification information, description information of to-be-processed data, operation type information for the to-be-processed data, and object identification information of the object device carried in the data processing request, searching a stored blockchain for a target smart contract corresponding to the contract identification information based on the contract identification information, processing the to-be-processed data in accordance with a processing manner in the target smart contract corresponding to the operation type information, to obtain a data processing result, and returning the data processing result to the object device.

## Description

### CROSS-REFERENCE TO RELATED APPLICATION

This application is filed based on and claims priority to Chinese Patent Application No. 202211658556.0 filed on December 22, 2022. The entire content of the above-referenced application is incorporated herein by reference.

### TECHNICAL FIELD

This application relates to the field of blockchain technologies, and in particular, to a data processing method and apparatus, an electronic device, a computer storage medium, and a computer program product.

### BACKGROUND

In the related art, during data processing, data processing engines collectively deployed on a server are usually used to perform targeted data processing based on a data processing request triggered by an object. A data processing function provided by each of the data processing engines is composed of a plurality of subsystem functions. The subsystem functions include a load balancing subsystem, various processing function subsystems, a network distribution subsystem, and the like.

However, since the data processing engines are collectively deployed, when a fault occurs or during service upgrading, all of the data processing engines can neither provide a data processing service for a user, nor satisfy a data processing requirement of the user. Moreover, due to a geographical limitation as a result of collective deployment, it is difficult to implement service extensions. In addition, at present, the data processing engines can store processing results in only a specific period of time after completing data processing, and therefore cannot satisfy a requirement of processing historical data in a large range. Furthermore, it is very difficult to ensure a comprehensive processing effect of the plurality of subsystem functions, and huge maintenance costs are required.

### SUMMARY

Embodiments of this application provide a data processing method and apparatus, an electronic device, a computer storage medium, and a computer program product. Through a node device in a blockchain system and smart contracts stored in the blockchain, various data processing functions can be implemented, so that not only a data processing requirement of a related object can be ensured, but also complexity of maintenance and deployment can be significantly reduced.

An embodiment of this application provides a data processing method, which is executable by a node device in a blockchain system. The method includes:
receiving a data processing request transmitted by an object device, and obtaining contract identification information, description information of to-be-processed data, operation type information for the to-be-processed data, and object identification information of the object device carried in the data processing request, the contract identification information being used for identifying a smart contract which includes a processing logic of at least one data processing function;
searching a stored blockchain for the smart contract as a target smart contract based on the contract identification information, and processing the to-be-processed data in accordance with a processing manner specified in the target smart contract and corresponding to the operation type information, to obtain a data processing result; and
returning the data processing result to the object device.

An embodiment of this application provides a data processing apparatus, including:
a receiving unit, configured to: receive a data processing request transmitted by an object device, and obtain contract identification information, description information of to-be-processed data, operation type information for the to-be-processed data, and object identification information of the object device carried in the data processing request, the contract identification information being used for identifying a smart contract which comprises a processing logic of at least one data processing function;
a processing unit, configured to: search a stored blockchain for the smart contract as a target smart contract based on the contract identification information, and process the to-be-processed data in accordance with a processing manner specified in the target smart contract and corresponding to the operation type information, to obtain a data processing result; and
a feedback unit, configured to return the data processing result to the object device.

An embodiment of this application provides an electronic device, including a memory, a processor, and a computer program stored in the memory and executable in the processor, the processor, when executing the computer program, implementing the data processing method described in any one of the above.

An embodiment of this application provides a computer-readable storage medium, storing a computer program, the computer program, when executed by a processor, implementing the data processing method described in any one of the above.

An embodiment of this application provides a computer program product, including a computer program, the computer program, when executed by a processor, implementing the data processing method described in any one of the above.

This application has the following beneficial effects:

In the embodiments of this application, the data processing method and apparatus, the electronic device, the computer storage medium, and the computer program product are provided. During implementation of a data processing function based on the data processing request of the object device, various data processing functions can be implemented through the node device in the blockchain system and the smart contracts stored in the blockchain, which can simplify a system structure for implementing data processing, and can implement transformation of maintenance and deployment of data processing engines to deployment and updating of the smart contracts on the blockchain, thereby significantly reducing complexity of maintenance and deployment. Moreover, through a distributed architecture of the blockchain system, distributed establishment of the data processing functions can be implemented. In addition, during the data processing, targeted data processing can be implemented for the to-be-processed data through calling of the target smart contract indicated in the data processing request. In this way, the various data processing functions can be conveniently deployed on the node device through the blockchain, which significantly reduces deployment and maintenance costs during implementation of the data processing functions, and conveniently implements extension of data processing services, thereby resolving restrictions of service extensions resulted from regional factors. In addition, since the node devices in the blockchain system all store the blockchain, when a single node device in the blockchain system fails, another node device can implement the same processing function. Therefore, normal running of the data processing service is not affected by the failure of the single node device. In this way, a normal response to the data processing request can be ensured without being perceived by the object device.

### BRIEF DESCRIPTION OF THE DRAWINGS

FIG. 1 is a schematic architectural diagram of a data processing engine in the related art.
FIG. 2 is a schematic diagram of a possible application scenario according to an embodiment of this application.
FIG. 3A is a schematic flowchart of data processing according to an embodiment of this application.
FIG. 3B is a schematic architectural diagram of stored smart contracts according to an embodiment of this application.
FIG. 3C is a schematic diagram of functions supported in a smart contract according to an embodiment of this application.
FIG. 3D is a schematic comparison diagram of an execution sequence of data processing transactions according to an embodiment of this application.
FIG. 4A is a schematic diagram of a process of implementing trusted computing according to an embodiment of this application.
FIG. 4B is a schematic diagram of another process of implementing trusted computing processing according to an embodiment of this application.
FIG. 5 is a schematic flowchart of calling a smart contract to perform a transaction according to an embodiment of this application.
FIG. 6 is a schematic diagram of a logic structure of a data processing apparatus according to an embodiment of this application.
FIG. 7 is a schematic structural diagram of hardware composition of an electronic device according to an embodiment of this application.
FIG. 8 is a schematic structural diagram of a computing apparatus according to an embodiment of this application.

### DETAILED DESCRIPTION

In order to make objectives, technical solutions, and advantages of embodiments of this application clearer, the technical solutions of this application are clearly and completely described below with reference to the drawings. Apparently, the described embodiments are some rather than all of the embodiments of the technical solutions of this application. All other embodiments obtained by a person of ordinary skill in the art based on the embodiments described in this application without making creative efforts fall within the protection scope of the technical solutions of this application.

Terms "first", "second", and the like in the specification, the claims, and the above drawings of this application are intended to distinguish between similar objects, rather than describe a specific sequence or order. It is to be understood that data used in this way may be transposed where appropriate, so that the embodiments of this application described herein may be, for example, implemented in an order different from those illustrated or described herein.

Some terms in this application are explained below for understanding by a person skilled in the art.

Blockchain: It is a distributed ledger technology in the field of information technologies, which is composed of contents such as consensus, transaction blocks, state data storage, and cryptographic identity security. Since a ledger is stored in a distributed manner and blocks are obtained through consensus, the blockchain has characteristics such as tamper resistance, traceability, and common maintenance.

Consensus: It is a mechanism that all nodes in a blockchain system jointly maintain block development. Common consensus mechanisms include proof of work (POW), proof of stake (POS), delegated proof of stake (DPOS), practical Byzantine fault tolerance (PBFT), and the like.

Node: It is alternatively referred to a node device, which is a smallest unit in the blockchain system participating in blockchain maintenance, and is a deployment and running unit of a blockchain node program.

Data processing engine: It is a tool configured to provide a data processing capability, which is usually a tool providing a standard restful interface, a google remote procedure call (GRPC) interface, a websocket interface service, or a function-level application programming interface (API) call function.

The blockchain is a new application mode of computer technologies such as distributed data storage, point-to-point transmission, a consensus mechanism, and an encryption algorithm. The blockchain, in essence, is a decentralized database, and includes a series of data blocks generated associatively through a cryptographic method. Each of the data blocks includes information about a batch of network transactions, which is subject to effectiveness verification (anti-counterfeiting) and is used for generating a next block. The blockchain may include an underlying blockchain platform, a platform product service layer, and an application service layer.

The underlying blockchain platform may include processing modules such as a user management module, a basic service module, a smart contract module, and an operation monitoring module. The user management module is responsible for identity information management of all blockchain participants, including maintenance of public and private key generation (account management), key management, maintenance of a correspondence between a real user identity and a blockchain address (permission management), and the like. In addition, when authorized, the user management module monitors and audits transactions of some specific real identities, and provides risk control rule configuration (risk control audit). The basic service module is deployed on all blockchain node devices to verify effectiveness of a business request and record the effective request in a storage after consensus is reached on the service request. For a new business request, the basic service module first performs adaptation analysis and authentication on an interface (interface adaptation), and then encrypts business information through a consensus algorithm (consensus management), transmits the consistent whole service information to a shared ledger (network communication), and records and stores the service information. The smart contract module is responsible for registration, issuance, triggering, and execution of contracts. A developer may define a contract logic through a specific programming language, issue the contract logic on the blockchain (contract registration), calls a key or another event to trigger execution based on a logic of conditions of a contract, completes the contract logic, and provides contract upgrading and canceling functions. The operation monitoring module is mainly responsible deployment, configuration modification, contract setting, and cloud adaptation during product release, and visualized output of a real-time status such as alarm, a monitored network status, and a monitored node device health status during product running.

The platform product service layer provides basic capabilities and implementation frameworks for typical applications. A developer can implement a service logic on the blockchain based on the basic capabilities in combination with business characteristics. The application service layer provides blockchain-based application services for use by business participants.

A design concept of embodiments of this application is briefly described below.

For data processing, most current data processing technologies are centralized service systems based on a cloud service. In some embodiments, data processing is implemented by data processing engines that are collectively deployed. In order to provide a data processing service, a standard restful interface is usually provided. A relevant object requests completion of a data processing task through the restful interface, and then the data processing engines on a server side perform targeted data processing. A data processing system (or referred to as a data processing engine) on the server side usually has a plurality of layers of architectures.

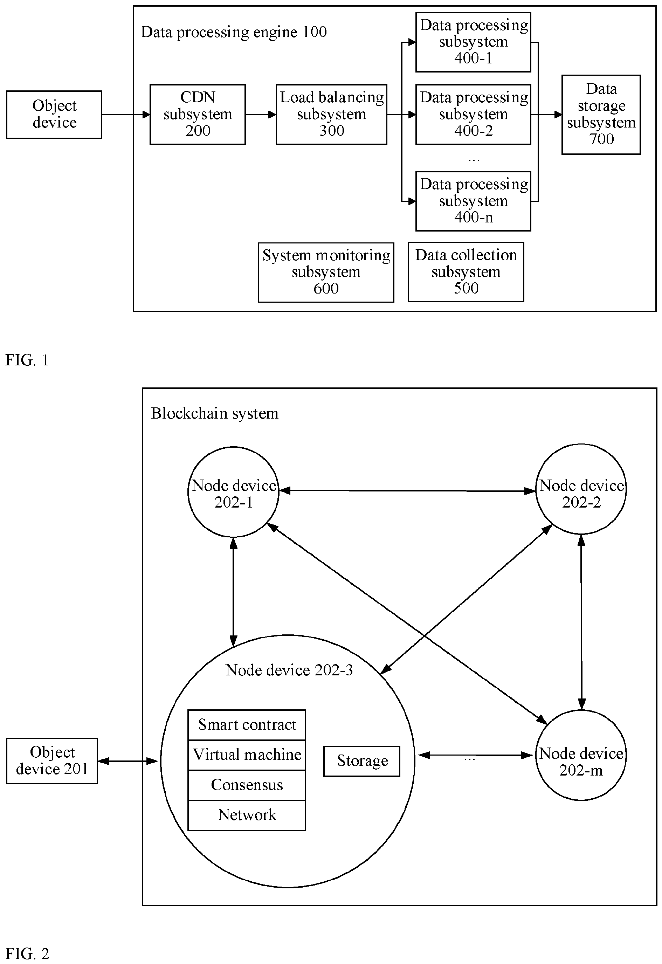

FIG. 1 is a schematic architectural diagram of a data processing engine in the related art. It may be learned from FIG. 1 that in the related art, a data processing engine 100 for implementing data processing includes a plurality of layers of architectures, including a content delivery network (CDN) subsystem 200, a load balancing subsystem 300, data processing subsystems 400-1 to 400-n, a data collection subsystem 500, a system monitoring subsystem 600, and a data storage subsystem 700.

The CDN subsystem 200 is configured to resolve a problem of a low network bandwidth, a problem regarding access traffic, and the like, and can increase a speed of making responses to an object device. The load balancing subsystem 300 is configured to distribute requests from different object devices to different data processing subsystems in a balanced manner for processing. The data processing subsystem is configured to process data to obtain a processing result. The system monitoring subsystem 600 is configured to monitor an overall running status of the data processing system. The data storage subsystem 700 is configured to store data.

However, since current data processing engines for performing data processing are collectively deployed and have complex composition, huge maintenance costs are required for deployment and maintenance, and a fault occurring in a single subsystem may affect normal data processing. Moreover, although the data processing engines include load balancing services, access of many object devices may still be affected when a fault occurs, and therefore significant impact is resulted from the system fault. Furthermore, due to impact of collective deployment, the data processing engines are subject to geographical limitations, which results in difficulty in expanding a scope of data services, and services need to be suspended during function upgrading, which affects normal business data. Moreover, since services of the data processing engines in the related art are generally provided by cloud vendors, the service functions tend to be standardized, and are subject to restrictions in function extension. The data processing engines usually rely on the functions provided by the cloud vendors, and cannot customize data processing functions for users.

In addition, in the data processing manner in the related art, most data processing engines adopt one-way authentication, to improve performance. In this case, the data processing engines are extremely vulnerable to an attack of requests, which inevitably causes losses, thereby leading to potential risks in data security and difficulty in implementing secure storage of data. Moreover, an operation history of the object device cannot be persistently stored. Therefore, relevant historical data cannot be traced. For example, after data replacement, only the latest data after the replacement is saved, and historical data before the replacement cannot be queried. Furthermore, the object device may obtain a processing result only from the data processing engines, and cannot verify accuracy of the processing result. Therefore, the accuracy of the data processing result cannot be determined.

In view of the above, the embodiments of this application provide a data processing method and apparatus, an electronic device, a computer storage medium, and a computer program product. A node device in a blockchain system receives a data processing request transmitted by an object device, and obtains contract identification information, description information of to-be-processed data, operation type information for the to-be-processed data, and object identification information of the object device carried in the data processing request, the contract identification information being used for identifying a smart contract which includes a processing logic of at least one data processing function; then searches a stored blockchain for the smart contract as a target smart contract based on the contract identification information, and processes the to-be-processed data in accordance with a processing manner specified in the target smart contract and corresponding to the operation type information, to obtain a data processing result; and returns the data processing result to the object device.

In this way, during implementation of a data processing function based on the data processing request of the object device, various data processing functions can be implemented through the node device in the blockchain system and the smart contracts stored in the blockchain, which can simplify a system structure for implementing data processing, and can implement transformation of maintenance and deployment of data processing engines to deployment and updating of the smart contracts on the blockchain, thereby significantly reducing complexity of maintenance and deployment. Moreover, through a distributed architecture of the blockchain system, distributed establishment of the data processing functions can be implemented. In addition, during the data processing, targeted data processing can be implemented for the to-be-processed data through calling of the target smart contract indicated in the data processing request. In this way, the various data processing functions can be conveniently deployed on the node device through the blockchain, which significantly reduces deployment and maintenance costs during implementation of the data processing functions, and conveniently implements extension of data processing services, thereby resolving restrictions of service extensions resulted from regional factors. In addition, since the node devices in the blockchain system all store the blockchain, when a single node device in the blockchain system fails, another node device can implement the same processing function. Therefore, normal running of the data processing service is not affected by the failure of the single node device. In this way, a normal response to the data processing request can be ensured without being perceived by the object device. Furthermore, based on a storage principle of the blockchain system, not only data generated during processing can be uploaded and stored, but also historical data can be queried and traced. Therefore, the data processing result can be verified from a perspective of the object device, thereby ensuring secure storage of data and improving reliability of the data processing result.

Exemplary embodiments of this application are described below with reference to the drawings. It is to be understood that, the exemplary embodiments described herein are merely used for illustrating and explaining this application and are not used for limiting this application, and the embodiments of this application and features in the embodiments may be combined with each other in case of no conflict.

FIG. 2 is a schematic diagram of a possible application scenario according to an embodiment of this application. In the schematic diagram of this application scenario, an object device 201 and a node device 202 (including node devices 202-1 to 202-m) are arranged.

In this embodiment of this application, the object device 201 is a terminal device where a target object is located, which may be a computer device having a specific computing capability, such as a personal computer, a mobile phone, a tablet computer, a notebook computer, an e-book reader, a smart home device, or an on-board terminal. The object device 201 may initiate a data processing request to the node device 202 in the blockchain system based on an actual processing requirement of the target object, and obtain a data processing result fed back from the node device 202. The node device accessed by the object device may be selected by the target object from the object device, or may be accessed by default based on distance information, or may be accessed based on a possible rule in the related art for terminals to accessing blockchain nodes. This is not limited in this application.

The node device 202 may be a node in the blockchain system, an independent physical server, a server cluster composed of a plurality of physical servers, a distributed system, or a cloud server that provides basic cloud computing services such as a cloud service, a cloud database, cloud computing, a cloud function, cloud storage, a network service, cloud communication, a middleware service, a domain name service, a security service, a CDN, big data, and an artificial intelligence platform.

In this embodiment of this application, a data processing engine based on a smart contract of the blockchain mainly includes a basic blockchain system and a smart contract used for data processing. In terms of architecture, a single node device (or referred to as a node) in the blockchain system mainly includes modules such as a virtual machine, a consensus, a storage, a network, and a smart contract for processing data. For a device becoming a node in the blockchain system, the device needs to be configured with a node program to implement functions in the blockchain system. A program structure of the node program includes the virtual machine, the consensus module, the storage, and the network, which establish an execution environment for the smart contract. The node program can receive a data processing request, call the smart contract to complete processing, and upload and store data generated during the processing based on an actual processing requirement.

The technical solution provided in this application may be applied to various application scenarios to implement data processing for various types of multimedia data. The multimedia data may be videos, audio, documents, images, or the like.

A processing operation corresponding to the data processing request initiated by the object device includes but is not limited to any one or combination of operations such as document format conversion, document content retrieval, document editing, image format conversion, image scaling, image editing, a watermark operation, audio format conversion, audio bit rate conversion, audio editing, video format conversion, video compression, video editing, data query, and data statistics.

For various data processing requirements, the object device 201 may initiate a data processing request based on various data processing requirements for multimedia data, and carry description information of to-be-processed data, contract identification information of a smart contract to be called for execution, operation type information for the to-be-processed data, and object identification information of the object device in the data processing request.

After receiving the data processing request, the node device obtains a corresponding target smart contract based on the contract identification information carried in the data processing request, processes obtained to-be-processed data based on a storage logic stated in the target smart contract, and returns a data processing result to the object device 201. Then, when determining to upload and store the data processing result based on an actual processing requirement, during execution of the target smart contract, the node device calls a data storage interface, obtains a data storage logic in the blockchain system, and uploads and stores the data processing result based on the determined data storage logic.

The data processing process in this embodiment of this application is described in detail below with reference to the drawings from a perspective of a node device in the blockchain system.

In this embodiment of this application, the blockchain-based data processing engine is a distributed processing system, and the node devices generally adopt a point-to-point (p2p) communication network. In any space requiring a service, a node (or referred to as a node device) may be established to provide a data processing service as long as a network is smooth, and extension is not subject to regional restrictions.

When the object device initiates the data processing request, the object device may transmit the data processing request to at least one node device. In this case, when a single node (or referred to as a node device) in the blockchain system fails, another device may perform data processing without affecting normal running of the entire system. For the data processing request transmitted by the object device, the data processing may be further performed without being perceived by the object device. In the following description, the data processing process is described by using a processing process that may be performed by only one node device as an example.

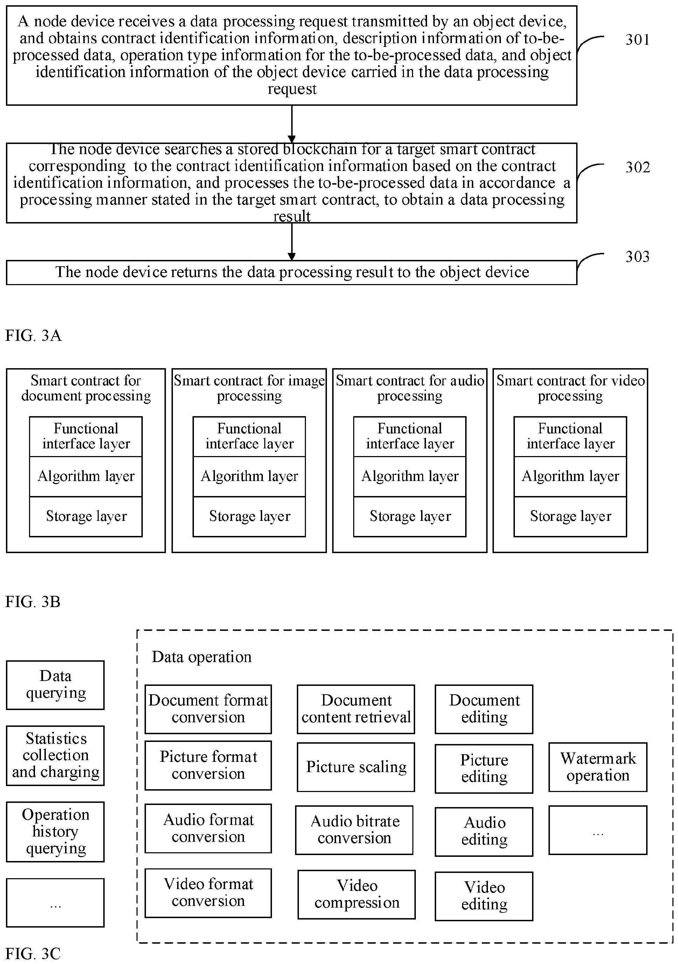

FIG. 3A is a schematic flowchart of data processing according to an embodiment of this application. The data processing process in this embodiment of this application is described in detail below with reference to FIG. 3A.

Step 301: The node device receives a data processing request transmitted by an object device, and obtains contract identification information, description information of to-be-processed data, operation type information for the to-be-processed data, and object identification information of the object device carried in the data processing request.

In the embodiments of this application, including the embodiments of both the claims and the specification (hereinafter referred to as "all embodiments of the present disclosure"), before receiving the data processing request transmitted by the object device, the node device needs to join the blockchain system to become a node.

In all embodiments of this application, the node device is preferably configured as follows. The node device may be configured as the node in the blockchain system by means of node deployment in the blockchain system, and store blockchain. The blockchain includes smart contracts stored for implementing different data processing functions.

Some node devices in the blockchain system may be configured with a node program based on an actual processing requirement. The node devices configured with the node program may serve as the node device in the blockchain system to perform the data processing, or may perform data processing based on a blockchain system maintained on another platform, to implement the data processing function by using the node device and stored smart contracts in the maintained blockchain system. Through deployment of the node programs, modules such as a virtual machine, a consensus, a storage, a network, and a smart contract for processing data exist in the node device.

For example, a blockchain system with powerful functions and extremely high performance may be easily established through the commonly used Chain of Chang'an technology in China, or a blockchain service may be directly purchased.

Through configuration of the processing function of the blockchain node, a device may be established as the node device in the blockchain system, which provides a processing basis for subsequent data processing based on the data processing request of the object device. Moreover, as the current blockchain technology gradually becomes mature, deployment and maintenance of the blockchain system become extremely simple. Therefore, for a data processing system (or referred to as a data processing engine) established based on the blockchain system in this application, system composition is significantly simplified, and deployment and maintenance costs are reduced.

In all embodiments of this application, the node device, which serves as the node in the blockchain system, stores blockchain, and the blockchain stores various transaction data and smart contracts that implement a processing logic of at least one data processing function. Establishment and storage processes of the blockchain and a deployment process of the smart contracts are mature technologies in the field, which are not limited in this application.

For example, during deployment of the smart contracts, after the smart contracts obtained through programming are obtained, the smart contracts may be uploaded and stored based on smart contract deployment manners in different blockchain architectures.

During step 301, the node device may receive the data processing request transmitted by the object device, the data processing request being established by the object device in a preset field format based on the description information of the to-be-processed data and the determined contract identification information, and a target smart contract corresponding to the contract identification information including a processing logic required for the to-be-processed data; and then parse the data processing request based on the field format, to obtain the contract identification information, the description information of to-be-processed data, the operation type information for the to-be-processed data, and the object identification information of the object device, one piece of contract identification information being used for identifying one smart contract, and a processing logic of at least one data processing function being stored in the one smart contract.

In all embodiments of this application, for the data processing request initiated by the object device, the data processing request may be triggered on a webpage in the object device, on a preset application (APP) in the object device, or on a specified mini program page in the object device. The node device may pre-specify the field format of the data processing request with the object device. In this way, from a perspective of a target object, the object device where the target object is located may generate the data processing request based on the preset field format; and from a perspective of the node device, the node device may parse the data processing request based on the preset field format, thereby determining the information content carried in the data processing request.

In all embodiments of this application, the data processing request may further carry indication information indicating whether data needs to be uploaded and stored onto the blockchain, and a recognition statement for the indication information may be configured in the smart contract. Therefore, during subsequent data processing, only data for which it is determined based on the indication information and the smart contract that uploading and storage are required is stored.

For example, a request structure indicating a defined operation algorithm type and a data processing request is shown as follows:

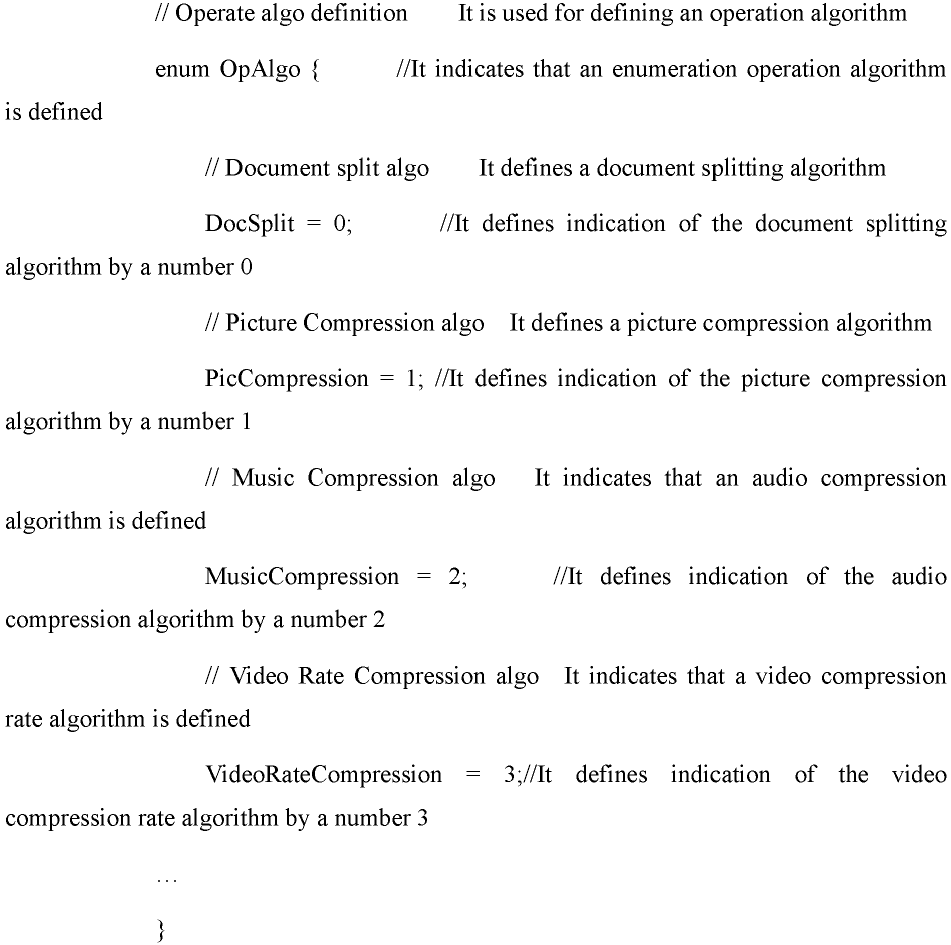

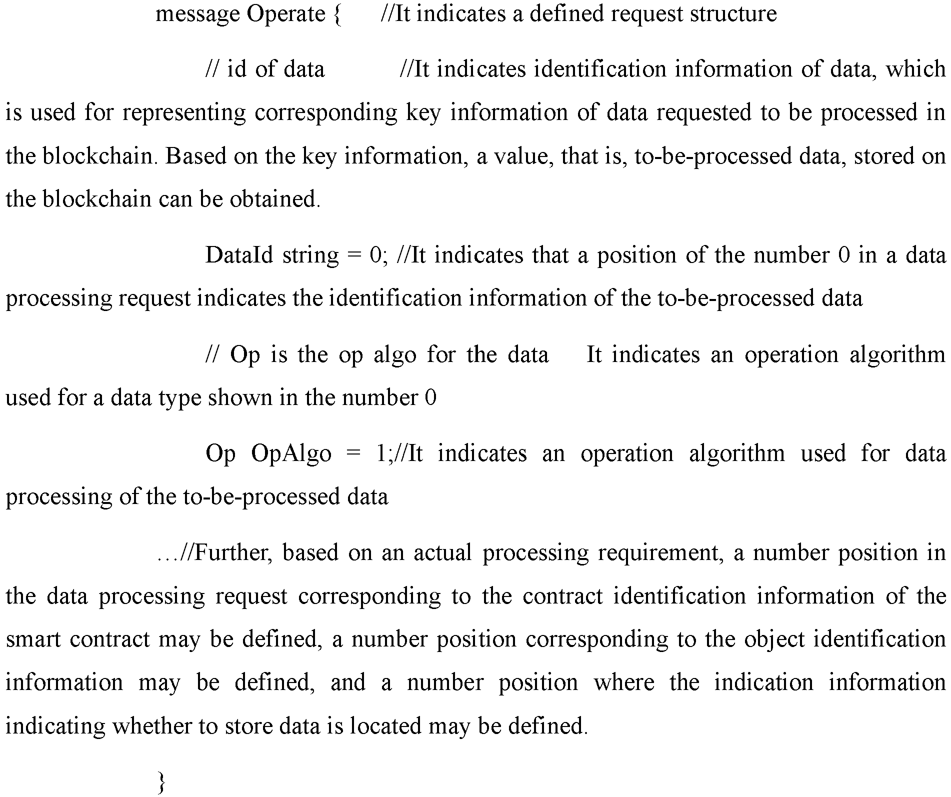

Through definition of the enumeration operation algorithm, the data processing function that can be implemented by the node device has extensibility. Through addition of definition of the operation algorithm and deployment of the smart contracts for implementing data processing, extension of the data processing function can be conveniently implemented, which is equivalent to that extension of the processing function in the smart contracts is implemented. Moreover, through the defined field format, the content in the data request can be effectively parsed, and effective processing of the data can be implemented with a standardized request structure.

In all embodiments of this application, a plurality types of smart contracts may be defined based on types of the to-be-processed data and to-be-implemented processing operations, or the plurality types of smart contracts may be combined into one smart contract. This is not limited in this application.

Each smart contract includes three layers of logical structures: a functional interface layer, an algorithm layer, and a storage layer, the functional interface layer being configured to define an implementable data processing function and a parameter basis for data processing, the algorithm layer being configured to define algorithm content for implementing the data processing function, and the storage layer being configured to define a storage form of a data processing result. In other words, the functional interface layer is configured to express a function supported by the smart contract and a parameter that needs to be inputted to implement the function. The algorithm layer includes a data processing algorithm involved in implementation of the data processing, which is configured to be called by the functional layer based on an actual processing requirement. The storage layer is configured to store data finally generated by the algorithm layer. In all embodiments of the present disclosure, an encapsulated data storage interface may be called in the storage layer, so that the data may be uploaded and stored in the blockchain system.

For example, FIG. 3B is a schematic architectural diagram of stored smart contracts according to an embodiment of this application. It may be learned based on content shown in FIG. 3B that smart contracts for processing corresponding data may be respectively established for various multimedia data such as a document, a picture, an audio, and a video. Each type of smart contract includes the same hierarchical structure.

For another example, FIG. 3C is a schematic diagram of functions supported in a smart contract according to an embodiment of this application. With reference to FIG. 3C, the functions that can be implemented by the smart contract are defined by the functional interface layer of the smart contract. Typical functions include querying corresponding data content based on a data ID, various data operations, statistics collection and charging operations, and the like. The data operations may be divided into various operations based on different data types. For example, a format conversion operation includes format conversions for a document, a picture, an audio, and a video.

Based on an actual processing requirement, the smart contract may be compiled by a developer and then deployed on the blockchain, or may be compiled by the target object on the object device and then deployed on the blockchain. This is not limited in this application. Moreover, the smart contract has three general-purpose hierarchical structures, so that a relevant developer or the target object may perform programming hierarchically, thereby obtaining the smart contract for implementing data processing.

For example, in a possible implementation, during compilation of a smart contract for implementing a data processing function A, a developer 1 may compile implementation code of the functional interface layer, a developer 2 may compile implementation code of the algorithm layer, and a developer 3 may compile implementation code of the storage layer. Then the contents compiled by the developers 1 to 3 are integrated to obtain the smart contract for implementing the data processing function A.

The above is equivalent to dividing entire code corresponding to the smart contract into blocks, so that a plurality of persons may participate in the programming of the smart contract, thereby facilitating maintenance of the smart contract while establishing a smart contract with a clear internal logic. In this way, not only difficulty in programming the smart contract but also difficulty in extending a data processing capability is reduced.

Step 302: The node device searches a stored blockchain for a target smart contract corresponding to the contract identification information based on the contract identification information, and processes the to-be-processed data in accordance with a processing manner stated in the target smart contract, to obtain a data processing result.

In all embodiments of this application, after the node device obtains the object identification information, the contract identification information, the operation type information for the to-be-processed data, and the description information of the to-be-processed data carried in the data processing request, the node device searches the stored blockchain for the corresponding target smart contract based on the contract identification information in a case that it is determined based on the object identification information that the object device succeeds in identity compliance verification; then obtains the to-be-processed data in a case that it is determined based on the target smart contract, the object identification information, and the operation type information that the object device has a permission to request an operation corresponding to the operation type information; and then determines a functional interface in the target smart contract corresponding to the operation type information, and calls algorithm content corresponding to the functional interface to process the to-be-processed data.

In all embodiments of this application, before the data processing, identity compliance verification needs to be performed on the object device. During the verification, the node device may call an identity verification processing logic inside the blockchain through a preset identity verification interface, to implement signature verification on the object device. The identity verification logic at the blockchain level executed in different blockchain system architectures varies. In this application, a processing logic for signature verification in the blockchain system in the related art is reused to implement the identity compliance verification before processing.

Since the blockchain usually adopts a bidirectional authentication mechanism, all requests from the object device are usually recorded on the blockchain in a form of a transaction, and all transactions have a signature of the object device. The node device provides services to the object device only after determining, based on the verification logic in the blockchain system, that the object device succeeds in the signature verification. In this way, a possibility of an attack from the node device is reduced. Even if an attack occurs, normal business traffic and attack traffic may be respectively determined through the signature verification, thereby reducing unnecessary business costs and reducing impact of the attack on the data processing engine established based on the blockchain.

In a case that the node device determines that the object device succeeds in the identity compliance verification, the node device searches the stored blockchain for the corresponding target smart contract based on the contract identification information. Since the content in the blockchain is usually stored in a form of key-value, the obtaining of the contract identification information is equivalent to obtaining of a key that can be used to find the smart contract. In this way, the target smart contract may be determined through querying of a key value content that uses the contract identification information as a key.

Furthermore, the node device obtains the to-be-processed data in a case that it is determined based on the target smart contract, the object identification information, and the operation type information that the object device has a permission to initiate an operation corresponding to the operation type information.

In all embodiments of this application, after completing the identity compliance verification at the blockchain system level, and before processing based on the determined target smart contract, the node device verifies whether the object device has a permission to request the operation indicated in the operation type information by using an internal permission verification logic of the target smart contract, and obtains the to-be-processed data when determining that the object device has the permission to request the corresponding operation.

Since object devices that can request services from the node device are all object devices pre-registered with the blockchain system, the node device may configure, for the object devices, permissions to request operations. Based on this, the smart contract may define a correspondence between an object and a permission of the object to request an operation based on an actual processing requirement.

For example, an object set registered with the blockchain system may be maintained in the smart contract. Objects in the object set may request the node device to provide services. A corresponding operation permission set exists for each object in the object set, which indicates processing operations that the object may request.

For another example, it is determined that an object 1 purchases a data compression service. In this case, the object 1 has a permission to request an audio data compression operation. Based on this, when the object 1 initiates an audio data compression request, the node device may call a target smart contract for implementing a data compression function, to implement audio data compression based on obtained audio data.

In this way, the node device implements permission verification of the object device in the target smart contract after completing signature verification, which is equivalent to implementing service request authentication on the object device, thereby avoiding provision of a service beyond the permission of the object device.

During obtaining of the to-be-processed data, the node device may obtain the to-be-processed data in the following two manners based on actual different implementation scenarios:

Manner I: The to-be-processed data carried in the data processing request is obtained.

In all embodiments of this application, when the description information carried in the data processing request is used for describing content of the to-be-processed data, the node device determines, as the obtained to-be-processed data, data content determined based on the description information.

In some possible implementation scenarios, when the to-be-processed data the object device requests to process occupies a small storage space and the to-be-processed data is not pre-stored in the blockchain, the to-be-processed data may be directly carried in the data processing request received by the node device. In this case, the description information of the received to-be-processed data is used for describing the content of the to-be-processed data. Therefore, the to-be-processed data carried in the data processing request may be directly obtained.

Manner II: The to-be-processed data may be obtained through querying based on the description information in the data processing request.

In all embodiments of this application, when the description information carried in the data processing request indicates determination of data content stored in the blockchain, data content found in the blockchain based on the description information is determined as the obtained to-be-processed data. Alternatively, when the description information is used for describing a storage address of the to-be-processed data, data obtained based on the storage address is determined as the to-be-processed data.

In all embodiments of this application, in some possible implementation scenarios, when the to-be-processed data requested to be processed is pre-stored in the blockchain, the description information obtained by the node device may indicate a key corresponding to the to-be-processed data on the blockchain, so that the to-be-processed data (that is, a value corresponding to the key) may be obtained based on the key.

In some possible implementation scenarios, when the to-be-processed data the object device requests to process occupies a very large space, the to-be-processed data is not pre-stored in the blockchain, and the object device indicates that the to-be-processed data needs to be uploaded and stored, the node device may first call a target smart contract for implementing a data storage function based on the data processing request used for uploading and storage of the to-be-processed data, then upload and store the to-be-processed data based on a processing logic in the target smart contract for implementing the data storage function, and feed back corresponding key value information during uploading and storage of the to-be-processed data to the object device. Further, the node device determines the description information (that is, the key value) carried in the data processing request in response to the data processing request for the to-be-processed data. Then the node device determines the to-be-processed data through querying of a value corresponding to the description information. The value may be information about an address where the to-be-processed data is stored. In this case, the node device needs to obtain the to-be-processed data based on the obtained address information.

In some other possible implementation scenarios, when the to-be-processed data the object device requests to process occupies a very large space, the object device indicates that the to-be-processed data does not need to be uploaded and stored, and the to-be-processed data is not pre-stored in the blockchain, the description information carried in the data processing request received by the node device is the information about the address where the to-be-processed data is stored. In this case, the node device needs to obtain the to-be-processed data based on the address information.

In all embodiments of this application, a size of the occupied storage space may be determined based on a relationship between the space occupied by the to-be-processed data and a set value. When it is determined that the occupied space is greater than the set value, it may be determined that the occupied storage space is very large. When it is determined that the occupied space is less than the set value, it may be determined that the occupied storage space is not large. Since the content is stored on the blockchain in the form of a key-value, the corresponding key value may be determined through querying by using the description information as a key, thereby obtaining the to-be-processed data based on the key value obtained through querying.

In addition, during uploading and storage of the to-be-processed data that occupies a very large storage space, in a case that a relatively large storage space is required for storing the to-be-processed data, the node device may indicate that the object device needs to store the content of the to-be-processed data on a designated device such as a cloud based on an actual processing requirement, so that the data processing request transmitted by the object device may carry unified resource locator (URL) information indicating a storage location of the to-be-processed data. During processing of the data storage request, the node device uses a processing logic in the specified data storage smart contract corresponding to a data storage functional interface, and calls a mature manner of uploading and storing data in the related art to upload and store the established key-value and defined dictionary content. Data identification information (recorded as a data ID) generated for the to-be-processed data is used as the key, and the URL corresponding to the to-be-processed data is used as the value corresponding to the key. The dictionary content defines a data structure for the uploading and storage, which indicates a data structure used during the uploading and storage, that is, defines a correspondence between the key and the value.

In all embodiments of this application, a key in the dictionary content may be the data Id (that is, information that can uniquely identify the data), and a value in the dictionary content may be a byte array obtained after data serialization based on a specific structure. The dictionary content may define specific structures corresponding to all types of data, and these structures may be uniformly defined through google protocol buffers (protobuff). In addition, types of to-be-stored data may be adjusted based on an actual processing requirement.

For example, a typical data structure is as follows:

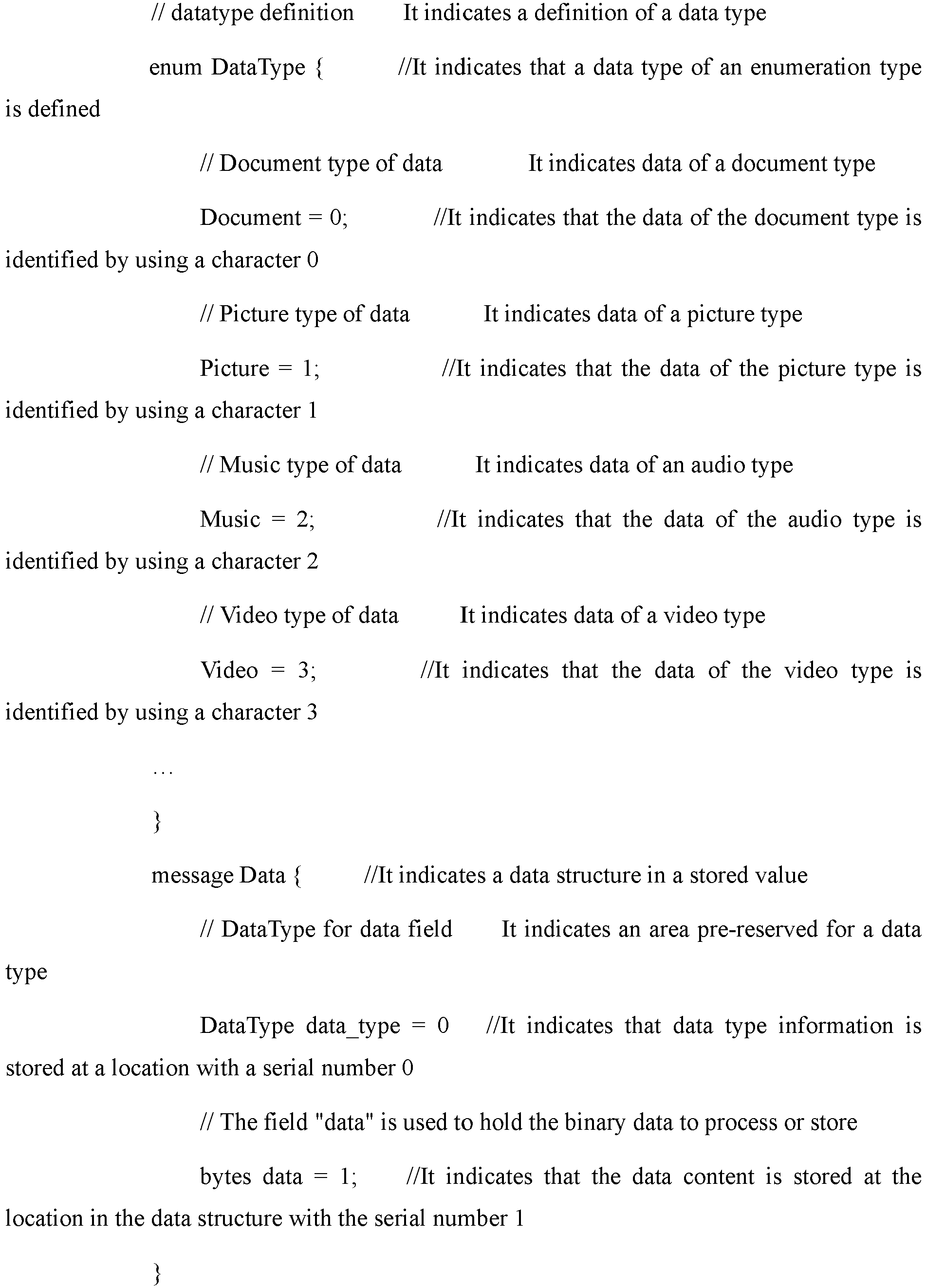

For example, assuming that audio data needs to be uploaded and stored, it may be learned based on the dictionary content that a structure of the audio data during uploading and storage is as follows: Audio data ID-{2; audio data content in a binary form}. The character 2 indicates the audio type.

Through definition of the data types having extensibility for data storage and specifying of the smart contract for implementing the data processing for the to-be-processed data, corresponding processing algorithms may be conveniently called for data processing based on different data types during calling of the specified smart contract to implement the data processing, thereby improving data processing efficiency.

Moreover, through the above manners of obtaining the to-be-processed data illustrated in Manners I and II, the to-be-processed data may be effectively obtained in various scenarios.

In all embodiments of this application, the node device determines a functional interface in the target smart contract corresponding to the operation type information, and calls algorithm content corresponding to the functional interface to process the to-be-processed data, to obtain the data processing result.

In all embodiments of this application, since one smart contract may include at least one functional interface, which indicates at least one processing function that may be implemented based on the smart contract, the operation type information is carried in the data processing request to determine a functional interface that needs to be called. The functional interface layer of the smart contract defines the function that can be implemented through calling of the smart contract, and an implementation algorithm in the algorithm layer of the smart contract may be called by using a functional interface in the functional interface layer. Then the node device processes the to-be-processed data through calling of the algorithm content corresponding to the functional interface, to obtain the data processing result.

After the target smart contract and the operation type are determined based on the data processing request, a data processing service may be provided when it is determined through the target smart contract that the object device succeeds in the authentication. In this way, through the distributed architecture of the blockchain system, the data processing function may be provided on each node device, so that an effective response may be made to the data processing request of the object device, thereby ensuring stable data processing.

Step 303: The node device returns the data processing result to the object device.

In all embodiments of this application, for the obtained data processing result, when the node device executes the target smart contract, the node device determines whether the data processing result needs to be stored based on indication information carried in the data processing request indicating whether to store the data processing result. Based on the above, during the feedback of the data processing result by the node device, the following two types of operations may be performed.

In all embodiments of this application, it may be pre-specified that the data processing request of the object device needs to carry indication information indicating whether to store process data and the data processing result, and a statement for identifying the field is configured in the smart contract, so that different processing contents are executed based on different values of the field.

Type I: The data processing result is directly fed back to the object device.

In all embodiments of this application, the node device directly returns the obtained data processing result to the object device in a case that it is determined based on the data processing request not to store the data processing result.

In all embodiments of this application, the node device directly returns the data processing result obtained through processing to the object device in a case that it is determined that the data processing result does not need to be stored during execution of the target smart contract.

Type II: The data processing result is fed back to the object device, data identification information is generated for the data processing result, and the data identification information and the corresponding data processing result are uploaded and stored onto the blockchain.

In all embodiments of this application, in a case that it is determined based on the data processing request to store the data processing result, the node device generates the corresponding data identification information for the obtained data processing result, returns the data processing result to the object device, and stores the data identification information and the corresponding data processing result on each node device in the blockchain system based on a blockchain consensus principle.

In all embodiments of this application, in a case that it is determined that the data processing result needs to be stored during execution of the target smart contract, the node device returns the data processing result obtained through processing to the object device, and generates the corresponding data identification information for the data processing result. Then during execution of the target smart contract, the manner of uploading and storage in the blockchain system is requested through calling of the data storage interface, and the data identification information and the corresponding data processing result are stored on each node device in the blockchain system based on the blockchain consensus principle. The manner of uploading and storage is a mature technology in the art, which is not explained in this application.

Moreover, based on the storage principle of the blockchain system, since all generated data processing operations are stored in the form of a transaction, all historical operation data can be traced. Storage of the historical operation data is not affected by configuration of the object device, and the object device may configure whether to store the data generated during the processing (such as process data and processing result data). The storage of the historical operation data may be implemented through calling of the storage logic in the blockchain system, which is not limited in this application.

For example, a user 1 requests video editing and indicates that an editing result does not need to be stored. Based on the storage principle of the blockchain system, historical operation information indicating that the user 1 initiates the video editing operation is stored, but a final editing result is not stored.

In this way, to-be-stored data content indicated by the object device can be stored based on the storage requirement configured by the object device, so that adaptive processing can be performed based on storage requirements of different objects.

In all embodiments of this application, adjustment and upgrading of the data processing function may be implemented through upgrading and deployment of the smart contract. In other words, during function upgrading of the data processing engine of the blockchain system, only the corresponding smart contract needs to be upgraded. In addition, during the upgrading of the smart contract, businesses of a smart contract corresponding to a function currently being upgraded and a smart contract corresponding to another function are not affected. Since the upgrading of the smart contract is dependent on a transaction regarding the upgrading of the smart contract and other transactions calling the contract, the blockchain system automatically sorts related transactions (or referred to as data processing requests) and executes the transactions in sequence, thereby ensuring that all transactions are executed correctly.

In all embodiments of this application, the node device receives a function adjustment processing request for a target data processing function, and obtains a to-be-stored smart contract carried in the function adjustment processing request and including an adjusted processing logic; and sorts received data processing requests based on a dependency between the target data processing function and another data processing request, and processes the data processing requests based on a sorting result.

In addition, for a smart contract, different transactions calling the smart contract may be dependent on each other (which process the same data), or may not be dependent on each other (which process data completely different from each other). Regardless of whether the smart contract is upgraded, an execution relationship between the transactions is not affected in both cases.

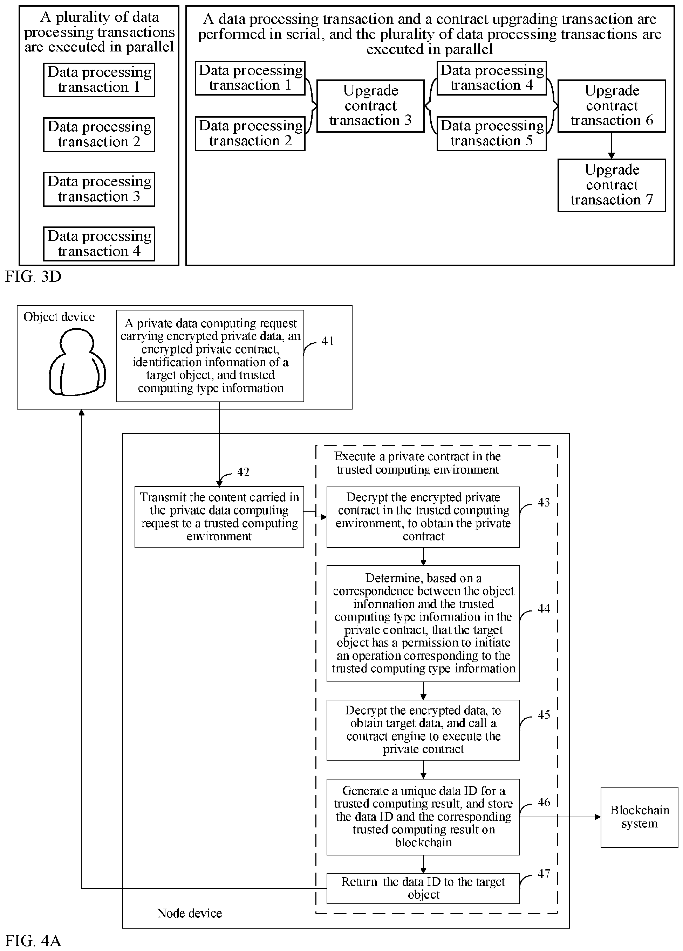

It is assumed that all transactions calling the same smart contract are not dependent on each other. FIG. 3D is a schematic comparison diagram of an execution sequence of data processing transactions according to an embodiment of this application. Based on FIG. 3D, in case of no contract upgrading, the data processing transactions (data processing requests) are executed in parallel, while in case of contract upgrading, a contract upgrading transaction and the data processing transactions are executed in serial, and the data processing transactions are executed in parallel.

In this way, an execution sequence of different data processing requests may be determined, which means that execution sequences are indicated respectively for a data querying and operation process, a data processing process in a trusted computing scenario, and a processing process for a smart contract upgrading transaction and a data processing transaction that are in parallel, so that various transactions can be executed in sequence based on an automatic sorting function in the blockchain system, thereby avoiding interruption of data processing during upgrading of the processing function.

The data processing solution provided in all embodiments of this application may further be applied to a trusted computing scenario. The node device is configured with a trusted computing environment, to perform trusted computing. Configuration of the trusted computing environment is a conventional technology in the art, which is not limited in this application.

For a data processing task with a trusted computing requirement, two blockchain-based processing solutions may be provided based on different security levels. In a first processing solution, both deployment and calling of a smart contract are performed in a trusted manner by directly accessing a trusted computing service, and then data generated through computation and a data ID are stored on the blockchain. In a second processing solution, deployment and calling of the smart contract is executed through the blockchain, but the contract is finally executed through the trusted computing environment.

An encryption manner and a decryption manner of data are specified between the node device and the object device of the target object, so that the node device may decrypt encrypted data transmitted by the object device.

In the first processing solution, the node device receives a trusted processing request triggered by the object device for the encrypted data, and obtains the encrypted data, an encrypted smart contract, trusted computing type information for the encrypted data, and the object identification information of the object device carried in the trusted processing request; then decrypts the encrypted smart contract in an established trusted computing environment, to obtain a corresponding trusted smart contract; decrypts the encrypted data in a case that it is determined that the object device has a permission to request an operation corresponding to the trusted computing type information, to obtain the target data; and processes the target data by using a trusted computing logic stated in the trusted smart contract, to obtain a trusted computing result; and then uploads and stores the trusted computing result, and returns key information corresponding to the trusted computing result to the object device.

In all embodiments of this application, in the first processing solution, after the node device obtains the encrypted data, the encrypted smart contract, the object identification information of the object device, and the trusted computing type information for the encrypted data carried in the trusted processing request, the node device performs the following operations in the trusted computing environment: decrypting the encrypted smart contract, and decrypting the encrypted data when it is determined based on the decrypted trusted smart contract, the object identification information of the object device, and the trusted computing type information that the object device has the permission to request the operation corresponding to the trusted computing type information, to obtain the target data; and calling an algorithm by using a trusted computing logic in the trusted smart contract matching the trusted computing type information to implement processing of the target data, so as to obtain the trusted computing result.

In all embodiments of this application, during the uploading and storage, after the node device executes the trusted smart contract in the trusted computing environment to obtain the trusted computing result, the node device further calls the data storage interface through the trusted smart contract, so that the uploading and storage of the data can be implemented in the data storage manner in the blockchain system.

For example, FIG. 4A is a schematic diagram of a process of implementing trusted computing according to an embodiment of this application. A process of trusted computing based on private data after authorization by a relevant object is described below with reference to FIG. 4A.

Step 41: An object device transmits, to a node device, a private data computing request carrying encrypted private data, an encrypted private contract, identification information of the object device, and trusted computing type information.

Step 42: The node device transmits the content carried in the private data computing request to a trusted computing environment.

Step 43: The node device decrypts the encrypted private contract in the trusted computing environment, to obtain a private contract.

Step 44: The node device determines, in the trusted computing environment based on a correspondence between the object information and the trusted computing type information in the private contract, that the object device has a permission to initiate an operation corresponding to the trusted computing type information.

Step 45: The node device decrypts the encrypted data in the trusted computing environment, to obtain target data, and calls a contract engine to execute the private contract.

Step 46: The node device generates a unique data ID for a trusted computing result in the trusted computing environment, and stores the data ID and the corresponding trusted computing result on blockchain.

In all embodiments of this application, a data storage interface encapsulated in a storage layer is called in the private contract, so that a processing logic for data storage in a blockchain system may be obtained, to implement uploading and storage.

Step 47: The node device returns the data ID to the object device in the trusted computing environment.

In this way, effective processing can be implemented in the trusted computing environment through obtaining of the encrypted smart contract, the to-be-processed data, and an indicated trusted computing type in case of a requirement for trusted computing, thereby ensuring security of the data processing.

In the second processing solution, the smart contract that needs to be executed in the trusted computing environment has been stored in the blockchain in an encrypted form, and the data content that needs to be processed has also been pre-stored in the blockchain system in an encrypted form. In this case, the data processing may be performed according to the normal data processing shown in FIG. 3A.

In a case that the node device is configured for trusted computing and the data processing request is used for requesting to perform trusted processing on encrypted data, the contract identification information in the data processing request is used for identifying a trusted smart contract stored in the blockchain in an encrypted form, the description information is used for describing target data stored in an encrypted form, and the operation type information indicates requested trusted computing type information. Further, during the trusted computing, the node device decrypts the trusted smart contract stored in an encrypted form in the established trusted computing environment, to obtain the trusted smart contract; decrypts the target data stored in an encrypted form in a case that it is determined that the object device has a permission to request an operation corresponding to the trusted computing type information, to obtain the target data; and processes the target data based on a trusted computing logic stated in the trusted smart contract.

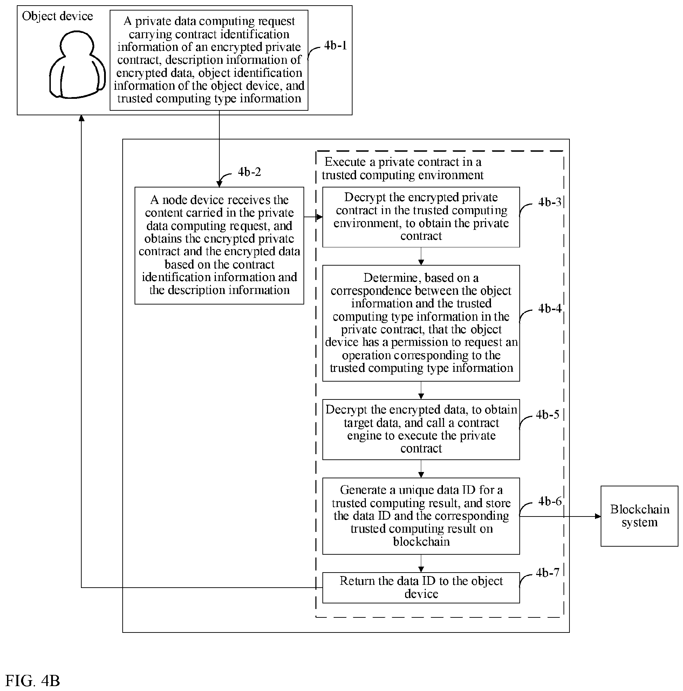

For example, FIG. 4B is a schematic diagram of another process of implementing trusted computing processing according to an embodiment of this application. A process of trusted computing based on private data after authorization by a relevant object is described below with reference to FIG. 4B.

Step 4b-1: An object device transmits, to a node device, a private data computing request carrying contract identification information of an encrypted private contract, description information of encrypted data, object identification information of the object device, and trusted computing type information.

Step 4b-2: The node device receives the content carried in the private data computing request, and obtains the encrypted private contract and the encrypted data based on the contract identification information and the description information.

Step 4b-3: The node device decrypts the encrypted private contract in the trusted computing environment, to obtain a private contract.

Step 4b-4: The node device determines, in the trusted computing environment based on a correspondence between the object information and the trusted computing type information in the private contract, that the object device has a permission to request an operation corresponding to the trusted computing type information.

Step 4b-5: The node device decrypts the encrypted data in the trusted computing environment, to obtain target data, and calls a contract engine to execute the private contract.

Step 4b-6: The node device generates a unique data ID for a trusted computing result in the trusted computing environment, and stores the data ID and the corresponding trusted computing result on blockchain.

In all embodiments of this application, a data storage interface encapsulated in a storage layer is called in the private contract, so that a processing logic for data storage in a blockchain system may be obtained, to implement uploading and storage.

Step 4b-7: The node device returns the data ID to the object device in the trusted computing environment.

In this way, the implementation steps of the trusted computing can be integrated into a common data processing process, so that the trusted computing can be implemented based on the smart contracts and the target data stored on the blockchain in an encrypted form.

Next, the following example is used for illustrating the process of calling the smart contract to perform querying and operation processing during processing of various types of data.

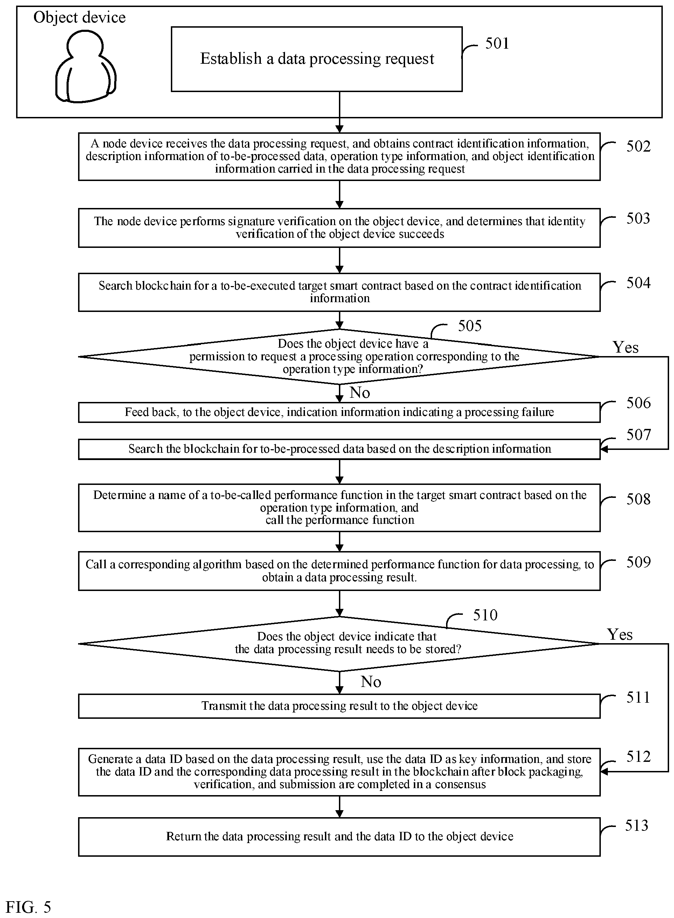

FIG. 5 is a schematic flowchart of calling a smart contract to perform a transaction according to an embodiment of this application. The process of calling for querying and operation is described below with reference to the FIG. 5.

Step 501: An object device establishes a data processing request.

Step 502: A node device receives the data processing request, and obtains contract identification information, description information of to-be-processed data, operation type information, and object identification information carried in the data processing request.

Step 503: The node device performs signature verification on the object device, and determines that identity verification of the object device succeeds.

Step 504: The node device searches blockchain for a to-be-executed target smart contract based on the contract identification information.

Step 505: The node device determines whether the object device has a permission to request a processing operation corresponding to the operation type information. If yes, step 507 is performed. Otherwise, step 506 is performed.

Step 506: The node device feeds back, to the object device, indication information indicating a processing failure.

Step 507: The node device searches the blockchain for to-be-processed data based on the description information.

Step 508: The node device determines a name of a to-be-called performance function in the target smart contract based on the operation type information, and calls the performance function.

Step 509: The node device calls a corresponding algorithm based on the determined performance function for data processing, to obtain a data processing result.

Step 510: The node device determines whether the object device indicates that the data processing result needs to be stored. If yes, step 512 is performed. Otherwise, step 511 is performed.

Step 511: The node device transmits the data processing result to the object device.

Step 512: The node device generates a data ID based on the data processing result, uses the data ID as key information, and stores the data ID and the corresponding data processing result in the blockchain after block packaging, verification, and submission are completed in a consensus.

Step 513: The node device returns the data processing result and the data ID to the object device.

In conclusion, in the data processing solution provided in this application, an overall data processing engine architecture based on the smart contract in the blockchain is provided, and each smart contract has a general-purpose hierarchical contract structure, so that a developer can perform programming hierarchically, to implement a data processing function through execution of the smart contract. In addition, for types of the stored data, a definition of an extensible data type is provided, so that the smart contract for implementing the data processing function may call a corresponding processing algorithm for data processing based on different data types. Moreover, for the smart contract for implementing the data processing function, the functional layer interface thereof is defined to have extensibility, so that a new function may be added through programming based on an actual processing requirement. In addition, since the definition of the extensible data type is provided, the object device may define a request structure in the data processing request. Therefore, a specified algorithm may be used for data processing of data with a specified data ID. Moreover, through a transaction sorting function in the blockchain system, processing sequences are indicated respectively for a data querying and operation process, a data processing process in a trusted computing scenario, and a contract upgrading transaction and a data processing transaction that are in parallel.

Moreover, upgrading of the data processing function has no impact on businesses. Actual data processing by the blockchain-based data processing engine is implemented by using the smart contract. Contract upgrading is performed as an operation with the same level as requests such as uploading and storage of data and data processing, which does not affect running of businesses, and can achieve zero impact to businesses. In addition, a relevant object may implement deployment of a customized data processing algorithm based on the blockchain through compilation of the smart contract for implementing the data processing function, and function extension is not limited. Furthermore, due to a traceability characteristic of historical data on the blockchain system, all data processing operations of the blockchain-based data processing engine are stored in a form of a transaction, so that all historical data may be traced. In this way, a relevant object may query operation records from the node device to implement data collection and charging. In addition, since the data storage in the blockchain system has high security, no data security risk exists. In a special data sensitive scenario, data security may be protected through data and contract uploading, or through direct execution of the smart contract and the target data in the trusted computing environment.

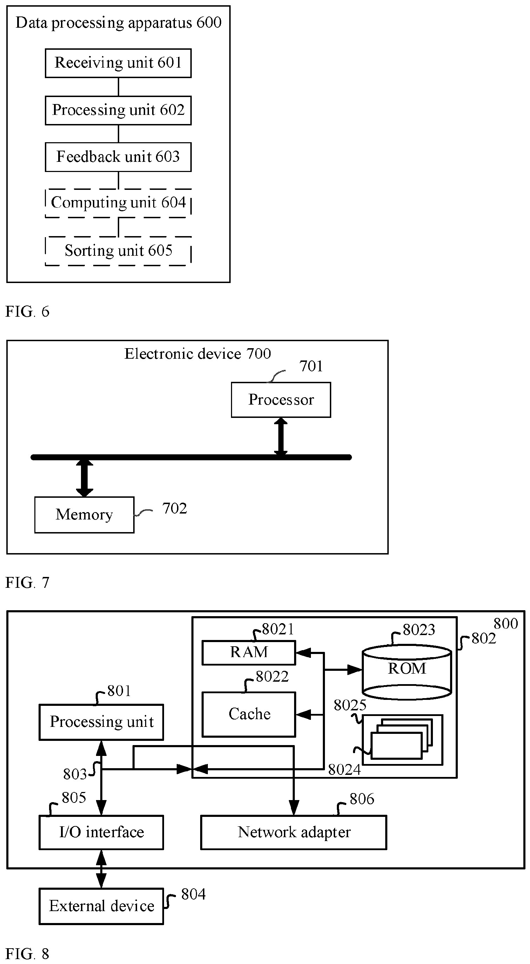

Based on the same inventive concept, FIG. 6 is a schematic diagram of a logic structure of a data processing apparatus according to an embodiment of this application. A data processing apparatus 600 includes a receiving unit 601, a processing unit 602, and a feedback unit 603.

The receiving unit 601 is configured to: receive a data processing request transmitted by an object device, and obtain contract identification information, description information of to-be-processed data, operation type information for the to-be-processed data, and object identification information of the object device carried in the data processing request, the contract identification information being used for identifying a smart contract which includes a processing logic of at least one data processing function. The processing unit 602 is configured to: search a stored blockchain for the smart contract as a target smart contract based on the contract identification information, and process the to-be-processed data in accordance with a processing manner specified in the target smart contract and corresponding to the operation type information, to obtain a data processing result. The feedback unit 603 is configured to return the data processing result to the object device.

In all embodiments of this application, the smart contract is preferably configured as follows. Each smart contract includes three layers of logical structures: a functional interface layer, an algorithm layer, and a storage layer, the functional interface layer being configured to define an implementable data processing function and a parameter basis for data processing, the algorithm layer being configured to define algorithm content for implementing the data processing function, and the storage layer being configured to define a storage form of a data processing result.

In all embodiments of this application, the data processing task with a trusted computing requirement is preferably processed in one manner. In a case that the node device is configured for trusted computing and the data processing request is used for requesting to perform trusted processing on encrypted data, the contract identification information is used for identifying a trusted smart contract stored in the blockchain in an encrypted form, the description information is used for describing target data stored in an encrypted form, and the operation type information indicates requested trusted computing type information.

During the searching of the stored blockchain for the smart contract as the target smart contract based on the contract identification information and processing of the to-be-processed data in accordance with the processing manner in the target smart contract corresponding to the operation type information, the processing unit 602 is configured to: decrypt the trusted smart contract stored in the encrypted form in an established trusted computing environment, to obtain the trusted smart contract; decrypt the target data stored in the encrypted form in a case that it is determined that the object device has a permission to request an operation corresponding to the trusted computing type information, to obtain the target data; and process the target data based on a trusted computing logic stated in the trusted smart contract.

In all embodiments of this application, the data processing task with a trusted computing requirement is preferably processed in another manner. When the node device is configured to perform data processing in a trusted computing mode, the apparatus further includes a computing unit 604. The computing unit 604 is configured to: receive a trusted processing request triggered by the object device for encrypted data, and obtain the encrypted data, an encrypted smart contract, trusted computing type information for the encrypted data, and the object identification information of the object device carried in the trusted processing request; decrypt the encrypted smart contract in an established trusted computing environment, to obtain a corresponding target smart contract; decrypt the encrypted data in a case that it is determined that the object device has a permission to request an operation corresponding to the trusted computing type information, to obtain target data; and process the target data by using a trusted computing logic stated in the target smart contract, to obtain a trusted computing result; and upload and store the trusted computing result in the blockchain, and return key information corresponding to the trusted computing result to the object device.

In all embodiments of this application, the node device is preferably configured as follows. Before the receiving of the data processing request transmitted by the object device, the receiving unit 601 is configured to: configure the node device as a node in the blockchain system in a node deployment manner in the blockchain system, and store the smart contracts for implementing different data processing functions.

In all embodiments of this application, during the receiving of the data processing request transmitted by the object device, and the obtaining of the contract identification information, the description information of the to-be-processed data, and the operation type information for the to-be-processed data, and the object identification information of the object device carried in the data processing request, the receiving unit 601 is configured to: receive the data processing request transmitted by the object device, the data processing request being established in a preset field format based on the description information of the to-be-processed data and the determined contract identification information, and the target smart contract corresponding to the contract identification information including a processing logic required for the to-be-processed data; and parse the data processing request based on the field format, to obtain the contract identification information, the description information of the to-be-processed data, and the object identification information of the object device.

In all embodiments of this application, during the searching of the stored blockchain for the smart contract as the target smart contract based on the contract identification information and processing of the to-be-processed data in accordance with the processing manner in the target smart contract corresponding to the operation type information, the processing unit 602 is configured to: search the stored blockchain for the smart contract as the corresponding target smart contract based on the contract identification information in a case that it is determined based on the object identification information that the object device succeeds in identity compliance verification; obtain the to-be-processed data in a case that it is determined based on the target smart contract, the object identification information, and the operation type information that the object device has a permission to initiate an operation corresponding to the operation type information; and determine a functional interface in the target smart contract corresponding to the operation type information, and call algorithm content corresponding to the functional interface to process the to-be-processed data.

In all embodiments of this application, during the feedback of the obtained data processing result to the object device, the processing unit 602 is configured to: generate corresponding data identification information for the obtained data processing result, return the data processing result to the object device, and store the data identification information and the corresponding data processing result on each of node devices in the blockchain system based on a blockchain consensus principle, in a case that it is determined based on the data processing request to store the data processing result; and directly return the obtained data processing result to the object device in a case that it is determined based on the data processing request not to store the data processing result.

In all embodiments of this application, during the obtaining of the to-be-processed data, the processing unit 602 is configured to perform any one of the following operations: determining data content found in the blockchain based on the description information as the obtained to-be-processed data in a case that the description information indicates determination of the data content stored in the blockchain; determining data content determined based on the description information as the obtained to-be-processed data in a case that the description information is used for describing content of the to-be-processed data; and determining data obtained based on a storage address of the to-be-processed data as the to-be-processed data in a case that the description information is used for describing the storage address.

In all embodiments of this application, the apparatus further includes a sorting unit 605. The sorting unit 605 is configured to: receive a function adjustment processing request for a target data processing function, and obtain a to-be-stored smart contract carried in the function adjustment processing request, the to-be-stored smart contract including an adjusted processing logic; and sort received data processing requests based on a dependency between the target data processing function and another data processing request, and process the data processing requests based on a sorting result.

After the data processing method and apparatus in the exemplary implementations of this application are described, an electronic device according to another exemplary implementation of this application is described below.

A person skilled in the art may understand that each aspect of this application may be implemented as a system, a method, or a program product. Therefore, each aspect of this application may be implemented in the following forms: a hardware only implementation, a software only implementation (including firmware, microcode, and the like), or an implementation of a combination of software and hardware, which may be collectively referred to as a "circuit", a "module", or a "system" herein.

Based on the same inventive concept as the above method embodiment, an embodiment of this application further provides an electronic device. FIG. 7 is a schematic structural diagram of hardware composition of an electronic device according to an embodiment of this application. An electronic device 700 may at least include a processor 701 and a memory 702. The memory 702 stores program code. The program code, when executed by processor 701, causes the processor 701 to perform any one of the above data processing steps.

In some possible implementations, a computing apparatus according to this application may at least include at least one processor and at least one memory. The memory stores program code. The program code, when executed by processor, causes the processor to perform the data processing steps according to the exemplary implementations of this application described in the above specification. For example, the processor may perform the steps shown in FIG. 3A.

A computing apparatus 800 according to an implementation of this application is described below with reference to FIG. 8. As shown in FIG. 8, the computing apparatus 800 is represented in a form of a general-purpose computing apparatus. The computing apparatus 800 may include, but is not limited to the following components: the at least one processing unit 801, the at least one storage unit 802, and a bus 803 connecting different system components (including a storage unit 802 and a processing unit 801).

The bus 803 may be one or more of a plurality of types of bus structures, including a memory bus or a memory controller, a peripheral bus, a processor, or a local bus that uses any one of the plurality of types of bus structures.

The storage unit 802 may include a readable medium in a form of a volatile memory, such as a random access memory (RAM) 8021 and/or a cache 8022, and may further include a read-only memory (ROM) 8023.

The storage unit 802 may further include a program/utility tool 8025 having a set of (at least one) program modules 8024. Such program modules 8024 include but are not limited to an operating system, one or more applications, another program module, and program data. Each or a combination of these examples may include implementation of a network environment.

The computing apparatus 800 may also communicate with one or more external devices 804 (such as a keyboard and a pointing device), and may further communicate with one or more devices that enable an object to interact with the computing apparatus 800, and/or any device (such as a router or a modem) that enables the computing apparatus 800 to communicate with one or more other computing apparatuses. The communication may be performed by using an input/output(I/O) interface 805. In addition, the computing apparatus 800 may further communicate with one or more networks (such as a local area network (LAN), a wide area network (WAN), and/or a public network, for example, the Internet) by using a network adapter 806. As shown in the figure, the network adapter 806 communicates with another module of the computing apparatus 800 by using the bus 803. It is to be understood that although not shown in the figure, another hardware and/or software module, including but not limited to microcode, a device driver, a redundant processor, an external disk drive array, a RAID system, a tape driver, and a data backup storage system may be used in combination with the computing apparatus 800.

Based on the same inventive concept as the above method embodiment, each data processing aspect of this application may be further implemented in a form of a program product, which includes a program code. When the program product is run on an electronic device, the program code causes the electronic device to perform the steps in the data processing method according to the exemplary implementations of this application described in the above specification. For example, the electronic device may perform the steps shown in FIG. 3A.

The program product may be any combination of one or more readable media. The readable media may be a readable signal medium or a readable storage medium. The readable storage medium, for example, may be but is not limited to, electrical, magnetic, optical, electromagnetic, infrared, or semiconductor systems, apparatuses, or devices, or any combination thereof. The readable storage medium (a non-exhaustive list) includes an electrical connection by one or more wires, a portable computer disk, a hard disk, a RAM, a ROM, an erasable programmable read-only memory (EPROM or a flash memory), an optical fiber, a portable compact disk read-only memory (CD-ROM), an optical memory device, a magnetic storage device, or any appropriate combination thereof.

Although the exemplary embodiments of this application have been described, a person skilled in the art may make additional changes and modifications to these embodiments once they know the basic creative concept. Therefore, the appended claims are intended to be interpreted as including the preferred embodiments and all changes and modifications falling within the scope of embodiments of this application.

Obviously, a person skilled in the art may make various modifications and variations to this application without departing from the spirit and scope of this application. In this way, if these modifications and variations of this application fall within the scope of the claims and their equivalent technologies, this application is also intended to include these modifications and variations.

## Claims

1. A data processing method, executable by a node device in a blockchain system, comprising:
receiving a data processing request transmitted by an object device, and obtaining contract identification information, description information of to-be-processed data, operation type information for the to-be-processed data, and object identification information of the object device carried in the data processing request, wherein the contract identification information is used for identifying a smart contract which comprises a processing logic of at least one data processing function;
searching a stored blockchain for the smart contract as a target smart contract based on the contract identification information, and processing the to-be-processed data in accordance with a processing manner specified in the target smart contract and corresponding to the operation type information, to obtain a data processing result; and
returning the data processing result to the object device.

2. The method according to claim 1, wherein each smart contract comprises three layers of logical structures: a functional interface layer, an algorithm layer, and a storage layer, the functional interface layer being configured to define an implementable data processing function and a parameter basis for data processing, the algorithm layer being configured to define algorithm content for implementing the data processing function, and the storage layer being configured to define a storage form of a data processing result.

3. The method according to claim 1, wherein when the node device is configured for trusted computing and the data processing request is used for requesting to perform trusted processing on encrypted data, the contract identification information is used for identifying a trusted smart contract stored in the blockchain in an encrypted form, the description information is used for describing target data stored in an encrypted form, and the operation type information indicates requested trusted computing type information; and
wherein searching stored blockchain for the smart contract as the target smart contract based on the contract identification information, and processing the to-be-processed data in accordance with the processing manner specified in the target smart contract and corresponding to the operation type information, to obtain the data processing comprises:
decrypting the trusted smart contract stored in the encrypted form in an established trusted computing environment, to obtain the trusted smart contract;
decrypting the target data stored in the encrypted form when it is determined that the object device has a permission to request an operation corresponding to the trusted computing type information, to obtain the target data; and
processing the target data based on a trusted computing logic stated in the trusted smart contract.

4. The method according to claim 1, wherein when the node device is configured to perform data processing in a trusted computing mode, the method further comprises:
receiving a trusted processing request triggered by the object device for encrypted data, and obtaining the encrypted data, an encrypted smart contract, trusted computing type information for the encrypted data, and the object identification information of the object device carried in the trusted processing request;
decrypting the encrypted smart contract in an established trusted computing environment, to obtain a corresponding target smart contract;
decrypting the encrypted data when it is determined that the object device has a permission to request an operation corresponding to the trusted computing type information, to obtain target data;
processing the target data through a trusted computing logic stated in the corresponding target smart contract, to obtain a trusted computing result; and
uploading and storing the trusted computing result onto the blockchain, and returning key information corresponding to the trusted computing result to the object device.

5. The method according to claim 1, further comprising: before receiving the data processing request transmitted by the object device,
configuring, by means of node deployment in the blockchain system, the node device as a node in the blockchain system; and storing smart contracts for implementing different data processing functions.

6. The method according to claim 1, wherein receiving the data processing request transmitted by the object device, and obtaining the contract identification information, the description information of to-be-processed data, the operation type information for the to-be-processed data, and the object identification information of the object device carried in the data processing request comprises:
receiving the data processing request transmitted by the object device, wherein the data processing request is established by the object device in a preset field format based on the description information of the to-be-processed data and the determined contract identification information, and the target smart contract identified by the contract identification information comprises a processing logic required for the to-be-processed data; and
parsing the data processing request based on the field format, to obtain the contract identification information, the description information of the to-be-processed data, and the object identification information of the object device.

7. The method according to any one of claims 1 to 6, wherein searching the stored blockchain for the smart contract as the target smart contract based on the contract identification information, and processing the to-be-processed data in accordance with the processing manner specified in the target smart contract and corresponding to the operation type information, to obtain the data processing result comprises:
searching the stored blockchain for the smart contract as the target smart contract based on the contract identification information when it is determined based on the object identification information that the object device succeeds in identity compliance verification;
obtaining the to-be-processed data when it is determined based on the target smart contract, the object identification information, and the operation type information that the object device has a permission to initiate an operation corresponding to the operation type information; and
determining, in the target smart contract, a functional interface corresponding to the operation type information, and calling algorithm content corresponding to the functional interface to process the to-be-processed data.

8. The method according to claim 7, wherein returning the data processing result to the object device comprises:
generating data identification information for the obtained data processing result, returning the data processing result to the object device, and storing the data identification information and the corresponding data processing result on each of node devices in the blockchain system based on blockchain consensus, when it is determined based on the data processing request to store the data processing result; and
directly returning the obtained data processing result to the object device when it is determined based on the data processing request not to store the data processing result.

9. The method according to claim 7, wherein obtaining the to-be-processed data comprises one of:
determining data content found in the blockchain based on the description information as the obtained to-be-processed data when the description information indicates determination of the data content stored in the blockchain;
determining data content determined based on the description information as the obtained to-be-processed data when the description information is used for describing content of the to-be-processed data; and
determining data obtained based on a storage address of the to-be-processed data as the to-be-processed data when the description information is used for describing the storage address.

10. The method according to any one of claims 1 to 6, further comprising:
receiving a function adjustment processing request for a target data processing function, and obtaining a to-be-stored smart contract carried in the function adjustment processing request, the to-be-stored smart contract comprising an adjusted processing logic; and
sorting received data processing requests based on a dependency between the target data processing function and another data processing request, and processing the data processing requests based on a sorting result.

11. A data processing apparatus, comprising:
a receiving unit, configured to: receive a data processing request transmitted by an object device, and obtain contract identification information, description information of to-be-processed data, operation type information for the to-be-processed data, and object identification information of the object device carried in the data processing request, wherein the contract identification information is used for identifying a smart contract which comprises a processing logic of at least one data processing function;
a processing unit, configured to: search a stored blockchain for the smart contract as a target smart contract based on the contract identification information, and process the to-be-processed data in accordance with a processing manner specified in the target smart contract and corresponding to the operation type information, to obtain a data processing result; and
a feedback unit, configured to return the data processing result to the object device.

12. The apparatus according to claim 11, wherein each smart contract comprises three layers of logical structures: a functional interface layer, an algorithm layer, and a storage layer, the functional interface layer being configured to define an implementable data processing function and a parameter basis for data processing, the algorithm layer being configured to define algorithm content for implementing the data processing function, and the storage layer being configured to define a storage form of a data processing result.

13. An electronic device, comprising a memory, a processor, and a computer program stored in the memory and executable in the processor, the processor, when executing the computer program, implementing the data processing method according to any one of claims 1 to 10.

14. A computer-readable storage medium, storing a computer program, the computer program, when executed by a processor, implementing the data processing method according to any one of claims 1 to 10.

15. A computer program product, comprising a computer program, the computer program, when executed by a processor, implementing the data processing method according to any one of claims 1 to 10.
